(19) Europäisches Patentamt
European Patent Office
Office européen des brevets

(11) EP 2 789 040 B1

(12) # EUROPÄISCHE PATENTSCHRIFT

(45) Veröffentlichungstag und Bekanntmachung des Hinweises auf die Patenterteilung:
**02.03.2016 Patentblatt 2016/09**

(21) Anmeldenummer: **12791474.5**

(22) Anmeldetag: **23.11.2012**

(51) Int Cl.:
***H01M 10/04*** *(2006.01)* ***H01M 10/0525*** *(2010.01)*
***H01M 10/0567*** *(2010.01)* ***H01M 4/505*** *(2010.01)*
***H01M 4/525*** *(2010.01)* ***H01M 4/58*** *(2006.01)*
***H01M 4/587*** *(2010.01)* ***H01M 4/131*** *(2010.01)*
***H01M 4/133*** *(2010.01)*

(86) Internationale Anmeldenummer:
**PCT/EP2012/073457**

(87) Internationale Veröffentlichungsnummer:
**WO 2013/083416 (13.06.2013 Gazette 2013/24)**

(54) **ELEKTROCHEMISCHE ZELLEN UND IHRE VERWENDUNG**

ELECTROCHEMICAL CELLS AND THEIR USE

CELLULES ÉLECTROCHIMIQUES ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2011 EP 11192608**
**08.12.2011 EP 11192580**

(43) Veröffentlichungstag der Anmeldung:
**15.10.2014 Patentblatt 2014/42**

(73) Patentinhaber: **BASF SE**
**67056 Ludwigshafen (DE)**

(72) Erfinder:
- **SCHRÖDLE, Simon**
**67059 Ludwigshafen (DE)**
- **LAMPERT, Jordan Keith**
**67063 Ludwigshafen (DE)**
- **SCHULZ-DOBRICK, Martin**
**68165 Mannheim (DE)**
- **MALKOWSKY, Itamar Michael**
**67346 Speyer (DE)**
- **GARSUCH, Arnd**
**67063 Ludwigshafen (DE)**
- **LEITNER, Klaus**
**67063 Ludwigshafen (DE)**
- **KUTSKI, Olaf**
**68163 Mannheim (DE)**

(56) Entgegenhaltungen:
**US-B1- 6 235 431**

- **ZHANG ET AL: "A review on electrolyte additives for lithium-ion batteries", JOURNAL OF POWER SOURCES, ELSEVIER SA, CH, Bd. 162, Nr. 2, 22. November 2006 (2006-11-22), Seiten 1379-1394, XP027938606, ISSN: 0378-7753 [gefunden am 2006-11-22]**
- **AURBACH D ET AL: "Studies of cycling behavior, ageing, and interfacial reactions of LiNi0.5Mn1.5O4 and carbon electrodes for lithium-ion 5-V cells", JOURNAL OF POWER SOURCES, ELSEVIER SA, CH, Bd. 162, Nr. 2, 22. November 2006 (2006-11-22), Seiten 780-789, XP027938520, ISSN: 0378-7753 [gefunden am 2006-11-22]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 789 040 B1

## Beschreibung

Die vorliegende Erfindung betrifft elektrochemische Zellen, enthaltend

(A) mindestens eine Kathode, die mindestens eine lithiierte Mn-haltige Verbindung aufweist, die einen Mn-Gehalt von 60 bis 80 mol-% aufweist, bezogen auf in Kathode (A) enthaltenes Übergangsmetall, wobei die lithiierte Mn-haltige Verbindung gewählt wird aus Verbindungen der Formeln

$$LiMn_{1-h}Fe_hPO_4$$

mit

$$0{,}2 \leq h \leq 0{,}4,$$

Schichtoxiden der Formel $Li_{(1+y)}[Ni_aCo_bMn_c]_{(1-y)}O_2$
wobei

y gewählt ist aus null bis 0.3,
c im Bereich von 0,6 bis 0,8 liegt, a, b jeweils gleich oder verschieden sein können und im Bereich von 0,0 bis 0,4 liegen,
und wobei gilt: a + b + c = 1

und Verbindung der allgemeinen Formel (I),

$$Li_{1+t}M_{2-t}O_{4-d} \qquad (I)$$

in der die Variablen wie folgt definiert sind:

d liegt im Bereich von null bis 0,4,
t liegt im Bereich von null bis 0,4,
M ist zwei oder mehrere Metalle der Gruppen 3 bis 12 des Periodensystems der Elemente,
wobei mehr als 60 mol-% von M Mangan ist,

(B) mindestens eine Anode, die Kohlenstoff in elektrisch leitfähiger Modifikation aufweist,
(C) mindestens einen Elektrolyten, der enthält

(a) mindestens ein aprotisches organisches Lösungsmittel,
(b) mindestens ein Lithiumsalz, und
(c) mindestens eine organische Verbindung der allgemeinen Formel (III), (IV) oder (I a1),wie unten stehend definiert.

Seit Jahren sucht man nach Methoden, elektrische Energie effizient zu speichern. Eine derartige Speicherung eröffnete die Möglichkeit, elektrische Energie dann zu erzeugen, wenn es vorteilhaft ist, und dann zu nutzen, wenn es erforderlich ist.

Akkumulatoren, beispielsweise Bleiakkumulatoren und Nickel-Cadmium-Akkumulatoren, sind bereits seit vielen Jahrzehnten bekannt. Nachteilig bei den bekannten Bleiakkumulatoren und Nickel-Cadmium-Akkumulatoren ist jedoch die verhältnismäßig geringe Energiedichte und der Memory-Effekt, der die Wiederaufladbarkeit und somit die Lebensdauer von Bleiakkumulatoren und Nickel-Cadmium-Akkumulatoren senkt.

Als Alternative werden Lithium-Ionen-Akkumulatoren genutzt, die vielfach auch als Lithium-Ionen-Batterien bezeichnet werden. Mit ihnen lassen sich höhere Energiedichte erzielen als mit Akkumulatoren, die auf Basis von Blei oder verhältnismäßig edlen Schwermetallen arbeiten.

Da in vielen Lithium-Ionen-Batterien metallisches Lithium bzw. Lithium der Oxidationsstufe 0 eingesetzt wird oder intermediär entsteht, sind sie wasserempfindlich. Wasserempfindlich bei Dauerbetrieb sind weiterhin die eingesetzten Elektrolyte, beispielsweise $LiPF_6$. Als Lösungsmittel für die in Lithium-Ionen-Batterien eingesetzten Lithiumsalze kommt daher Wasser nicht in Frage. Stattdessen werden als Lösungsmittel mit hinreichender Polarität organische Carbonate, Ether und Ester eingesetzt. Es wird in der Literatur daher empfohlen, wasserfreie Lösungsmittel für die Elektrolyten einzusetzen, s. beispielsweise WO 2007/049888.

Wasserfreie Lösungsmittel sind jedoch umständlich herzustellen und zu verarbeiten. Zahlreiche für Lithium-Ionen-Batterien an sich geeignete Lösungsmittel enthalten Anteile von Wasser in der Größenordnung von 100 ppm und mehr. Derart hohe Anteile an Wasser sind jedoch für die meisten Lithium-Ionen-Batterien nicht tragbar. Die Aufgabe, für Lithium-Ionen-Batterien hinreichend geeignete Lösungsmittel bereit zu stellen, wird dadurch verkompliziert, dass die meisten modernen Lithium-Ionen-Batterien nicht ein einzelnes Lösungsmittel enthalten, sondern Lösungsmittelgemische, von denen einige ein sehr unterschiedliches Reaktionsvermögen gegenüber Trocknungsmitteln aufweisen.

In US 6,235,431 wird vorgeschlagen, Verbindungen mit Si-N-Bindungen als Additiv zum Lösungsmittel(gemisch) in einer Lithium-Ionen-Batterie hinzuzugeben. Diese Verbindung reagiert mit Wasser und schützt dadurch sowohl das Leitsalz als auch das Kathodenmaterial. Insbesondere werden in US 6,235,431 Organosilazane und Organodisilazane empfohlen, weiterhin Hexamethylcyclotrisilazan. Es wurde jedoch beobachtet, dass derartige Verbindungen mit Wasser unter Bildung von Ammoniak oder flüchtigen organischen Aminen reagieren kann, die bei längerem Betrieb einer Lithium-Ionen-Batterie diese zu schädigen vermögen.

Weiterhin sind elektrochemische Zellen bekannt, die als Kathodenmaterial manganreiche Materialien verwenden, bei denen die Lithiumdeinterkalation im Wesentlichen bei hohen Potentialen erfolgt. Hohe Spannungen im Sinne dieser Erfindung sind Spannungen oberhalb 4,5 Volt, bezogen auf das Potential von metallischem Lithium. Besonders hohe Energiedichten werden erzielt, wenn solche Kathodenmaterialien in Verbindung mit Kohlenstoffanoden eingesetzt werden. Als Kohlenstoffanoden kommen beispielsweise Anoden in Betracht, die Graphit, teilamorphe oder amorphe Kohlenstoffpartikel enthalten. Bekannte elektrochemische Zellen beruhend auf diesen Materialien weisen Alterungseigenschaften auf, die für viele in Frage kommende Anwendungsbereiche, insbesondere im Kraftfahrzeugbereich, unzureichend sind. Beispielsweise wird ein starker Kapazitätsabfall bei mehrmaligem Laden und Entladen derartiger Zellen beobachtet, siehe beispielsweise D. Aurbach et al., J. Power Sci. 2006, 162, 780.

Es bestand also die Aufgabe, elektrochemische Zellen bereit zu stellen, die gute Gebrauchseigenschaften aufweisen und insbesondere gut zyklierbar sind, ohne zu negative Alterungserscheinungen aufzuweisen.

Dementsprechend wurden die eingangs definierten elektrochemischen Zellen gefunden.

Im Rahmen der vorliegenden Erfindung werden Lithium-Ionen-Akkumulatoren auch als Lithium-Ionen-Batterien bezeichnet.

Erfindungsgemäße elektrochemische Zellen enthalten

(A) mindestens eine Kathode, kurz auch Kathode (A) genannt, die mindestens eine lithiierte Mn-haltige Verbindung aufweist, die einen Mn-Gehalt von mindestens 60 bis 80 mol-% aufweist, bezogen auf in Kathode (A) enthaltenes Übergangsmetall,

(B) mindestens eine Anode, kurz auch Anode (B) genannt, die Kohlenstoff in elektrisch leitfähiger Modifikation aufweist,

(C) mindestens einen Elektrolyten, der enthält

  (a) mindestens ein aprotisches organisches Lösungsmittel, kurz auch Lösungsmittel (a) genannt,

  (b) mindestens ein Lithiumsalz, kurz auch Lithiumsalz (b) genannt

  (c) mindestens eine organische Verbindung, die mindestens eine Si-N-Einfachbindung pro Molekül aufweist, kurz auch Verbindung (c) genannt welche gemäss Anspruch 1 aus Verbindungen der allgemeinen Formeln (III) und (IV) sowie aus (1a.1) gewählt wird.

Kathode (A), Anode (B) und Elektrolyt (C) werden im Folgenden näher beschrieben.

In Kathode (A) enthaltene Lithium-haltige Verbindung ist erfindungsgemäss gewählt aus Lithium-haltigen Übergangsmetallmischoxiden mit Schichtstruktur, lithiierten Übergangsmetallmischoxiden mit Spinellstruktur und lithiierten Übergangsmetallphosphaten mit Olivinstruktur, $LiMn_{1-h}Fe_hPO_4$, mit $0{,}2 \leq h \leq 0{,}4$. Geeignete Übergangsmetallmischoxide mit Schichtstruktur sind erfindungsgemäss solche der allgemeinen Formel

$$Li_{(1+y)}[Ni_aCO_bMn_c]_{(1-y)}O_2$$

wobei y gewählt ist aus null bis 0,3, bevorzugt 0,05 bis 0,2,

c im Bereich von 0,6 bis 0,8 liegt, a, b jeweils gleich oder verschieden sein können und im Bereich von 0,0 bis 0,4 liegen, wobei gilt:

$$a + b + c = 1$$

Geeignete Übergangsmetallmischoxide mit Spinellstruktur sind erfindungsgemäss solche der allgemeinen Formel (I)

$$Li_{1+t}M_{2-t}O_{4-d} \qquad (I)$$

in der die Variablen wie folgt definiert sind:

d liegt im Bereich von null bis 0,4,
t liegt im Bereich von null bis 0,4,

wobei 60 bis 80 mol-% von M Mangan ist. Weitere M, aus denen maximal 40 mol-% gewählt sind, sind ein oder mehrere mehreren Metalle der Gruppen 3 bis 12 des Periodensystems der Elemente, beispielsweise Ti, V, Cr, Fe, Co, Ni, Zn, Mo, bevorzugt sind Co und Ni, und insbesondere Ni.

Dabei wird unter "in Kathode (A) enthaltenes Übergangsmetall" das gesamte im Kathodenmaterial enthaltene Übergangsmetall verstanden, unabhängig von der Oxidationsstufe, aber nicht Stromableiter, die Übergangsmetall enthalten können.

In einer Ausführungsform der vorliegenden Erfindung enthält mindestens eine Kathode (A) ein kathodisches Aktivmaterial mit einem Mangangehalt im Bereich von 60 bis 80 mol-%, bevorzugt 73 bis 78 mol-%, bezogen auf in Kathode (A) enthaltenes Übergangsmetall.

In einer Ausführungsform der vorliegenden Erfindung wählt man lithiierte Mn-haltige Verbindung aus $LiNi_{0.25}Mn_{0.75}O_4$, $LiNi_{0.24}Mn_{0.76}O_4$ und $Li\ Ni_{0.26}Mn_{0.74}O_4$.

Kathode (A) kann weiterhin beispielsweise Kohlenstoff in elektrisch leitfähiger Modifikation aufweisen, beispielsweise als Ruß, Graphit, Graphene oder als Kohlenstoff-Nanoröhren.

Kathode (A) kann beispielsweise weiterhin ein Bindemittel enthalten, beispielsweise ein polymeres Bindemittel. Besonders geeignete polymere Bindemittel sind Polyvinylidenfluorid (PVdF), Polytetrafluorethylen, Copolymere von Tetrafluorethylen und Hexafluorpropylen, Copolymere von Tetrafluorethylen und Vinylidenfluorid und Polyacrylnitril.

Erfindungsgemäße elektrochemische Zelle enthält mindestens eine Anode (B).

In einer Ausführungsform der vorliegenden Erfindung enthält mindestens eine Anode (B) Kohlenstoff in einer elektrisch leitfähigen Modifikation, beispielsweise Ruß, sogenannter Hard Carbon, also graphit-ähnlicher Kohlenstoff mit größeren amorphen Bereichen als Graphit sie aufweist, oder vorzugsweise Graphit.

Erfindungsgemäße elektrochemische Zelle enthält mindestens einen Elektrolyten (C), der enthält

(a) mindestens ein aprotisches organisches Lösungsmittel,
(b) mindestens ein Lithiumsalz, und
(c) mindestens eine organische Verbindung, die mindestens eine Si-N-Einfachbindung pro Molekül aufweist.

Elektrolyt (C) ist unter Normalbedingungen (1 bar, 0°C) flüssig, bevorzugt auch bei 1 bar und -15°C.

Elektrolyt (C) enthält mindestens ein aprotisches Lösungsmittel (a), bevorzugt mindestens zwei aprotische Lösungsmittel (a) und besonders bevorzugt mindestens drei aprotische Lösungsmittel (a). Aprotisches Lösungsmittel (a) ist in der Regel ein organisches Lösungsmittel.

In einer Ausführungsform der vorliegenden Erfindung kann Elektrolyt (C) bis zu zehn verschiedene aprotische Lösungsmittel (a) enthalten.

Dabei werden unter aprotischen organischen Lösungsmitteln (a) im Rahmen der vorliegenden Erfindung nicht nur solche aprotischen Lösungsmittel verstanden, die bei Zimmertemperatur flüssig sind.

Im Rahmen der vorliegenden Erfindung gelten auch solche aprotischen organischen Verbindungen als umfasst, die als reine Verbindung bei Zimmertemperatur fest sind, die aber im Gemisch mit den übrigen aprotischen organischen Lösungsmitteln flüssig sind. Beispielhaft sei Ethylencarbonat genannt, das in Mischung mit Diethylcarbonat und/oder Methylethylcarbonat in weiten Grenzen flüssig ist, als Reinstoff aber einen Schmelzpunkt von etwa 36°C aufweist.

In einer Ausführungsform der vorliegenden Erfindung wählt man aprotisches organisches Lösungsmittel (a) aus

(i) cyclischen und nicht-cyclischen organischen Carbonaten,
(ii) Di-$C_1$-$C_{10}$-alkylethern,
(iii) Di-$C_1$-$C_4$-Alkyl-$C_2$-$C_6$-alkylenethern,
(iv) cyclischen Ethern,
(v) cyclischen und acyclischen Acetalen und Ketalen,
(vi) Orthocarbonsäureestern und
(vii) cyclischen und nicht-cyclischen Carbonsäureestern.

In einer bevorzugten Ausführungsform der vorliegenden Erfindung wählt man aprotisches organisches Lösungsmittel (a) aus

(i) organischen Carbonaten, cyclisch oder acyclisch,
(ii) Di-$C_1$-$C_{10}$-alkylethern,
(iii) Di-$C_1$-$C_4$-Alkyl-$C_2$-$C_6$-alkylenethern, und
(v) cyclischen und acyclischen Acetalen und Ketalen.

Beispiele für bevorzugte nicht-cyclische organische Carbonate (i) sind Di- $C_1$-$C_4$-Alkylcarbonate, in denen $C_1$-$C_4$-Alkyl gleich oder verschieden sein können und gewählt sind aus $C_1$-$C_4$-Alkyl, beispielsweise Methyl, Ethyl, n-Propyl, iso-Propyl, n-Butyl, iso-Butyl, sec.-Butyl, bevorzugt Methyl oder Ethyl.

Besonders bevorzugte nicht-cyclische organische Carbonate (i) sind Dimethylcarbonat, Diethylcarbonat und Methylethylcarbonat und Mischungen davon, d.h. Mischungen von mindestens zwei der genannten Verbindungen Dimethylcarbonat, Diethylcarbonat und Methylethylcarbonat.

Beispiele für bevorzugte cyclische organische Carbonate (i) sind solche der allgemeinen Formel (V a) und (V b)

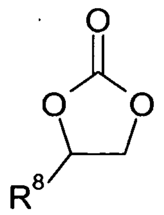
(V a)

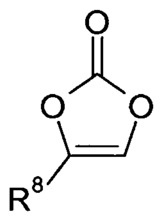
(V b)

in denen $R^8$ gewählt ist $C_1$-$C_4$-Alkyl, beispielsweise Methyl, Ethyl, n-Propyl, iso-Propyl, n-Butyl, iso-Butyl, sec.-Butyl, bevorzugt Methyl,
Fluor, ein- oder mehrfach fluoriertes $C_1$-$C_4$-Alkyl, beispielsweise $CF_3$ oder n-$C_4H_9$,
und insbesondere Wasserstoff.

Weiteres bevorzugtes cyclisches organisches Carbonat (i) ist Difluorethylencarbonat,

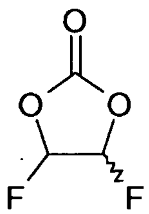

Beispiele für bevorzugte Di-$C_1$-$C_{10}$-alkylether (ii) sind Diethylether, Diisopropylether und Di-n-butylether.

Beispiele für Di-$C_1$-$C_4$-Alkyl-$C_2$-$C_6$-alkylenether (iii) sind 1,2-Dimethoxyethan, 1,2-Diethoxyethan, Diethylenglykoldimethylether, Triethylenglykoldimethylether, Tetraethylenglykoldimethylether und Diethylenglykoldiethylether.

Beispiele für cyclische Ether (iv) sind 1,4-Dioxan und Tetrahydrofuran (THF).

Beispiele für acyclische Acetale und Ketale (v) sind 1,1-Dimethoxyethan und 1,1-Diethoxyethan.

Beispiele für cyclische Acetale und Ketale (v) sind 1,3-Dioxolan und 1,3-Dioxan.

Beispiele für Orthocarbonsäureester (vi) sind Orthomeisensäure-tri-$C_1$-$C_4$-alkylester, insbesondere Orthoameisensäuretrimethylester und Orthoameisensäuretriethylester.

Beispiele für Carbonsäureester (vii) sind Essigsäureethylester und Buttersäuremethylester, weiterhin Dicarbonsäurester, beispielsweise Malonsäuredimethylester. Ein Beispiel für einen cyclischen Carbonsäureester (Lacton) ist $\gamma$-Butyrolacton.

In einer speziellen Ausführungsform der vorliegenden Erfindung enthält erfindungsgemäße Mischung nicht-cyclische organische Carbonat(e) und cyclische organische Carbonat(e) in einem Gewichtsverhältnis von 1 : 10 bis 10 : 1, bevorzugt 3 : 1 bis 1 : 1.

Elektrolyt (C) enthält weiterhin mindestens ein Lithiumsalz (b). Bei Lithiumsalzen (b) handelt es sich vorzugsweise um Salze von einwertigen Anionen. Beispiele für geeignete Lithiumsalze (b) sind $LiPF_6$, $LiBF_4$, $LiClO_4$, $LiAsF_6$, $LiCF_3SO_3$, $LiC(C_xF_{2x+1}SO_2)_3$, Lithiumbisoxalatoborat, Lithiumdifluorbisoxalatoborat, Lithiumimide wie $LiN(C_xF_{2x+1}SO_2)_2$, wobei x eine ganze Zahl in Bereich von 1 bis 20 ist, $LiN(SO_2F)_2$, $Li_2SiF_6$, $LiSbF_6$, $LiAlCl_4$, und Salze

der allgemeinen Formel $(C_xF_{2x+1}SO_2)_mXLi$, wobei x wie oben und m wie folgt definiert ist:

m = 1, wenn X gewählt wird aus Sauerstoff und Schwefel,
m = 2, wenn X gewählt wird aus Stickstoff und Phosphor, und
m = 3, wenn X gewählt wird aus Kohlenstoff und Silizium.

Besonders bevorzugte Lithiumsalze (b) sind gewählt aus $LiPF_6$, $LiBF_4$, $LiSbF_6$, LiBOB, LDFOB und $LiPF_3(CF_2CF_3)_3$ (LiFAP).

Elektrolyt (C) enthält weiterhin

(c) mindestens eine organische Verbindung, die mindestens eine Si-N-Einfachbindung pro Molekül aufweist, kurz Verbindung (c) genannt. Verbindung (c) ist erfindungsgemäss gewählt aus Verbindung (I a.1) und den cyclischen Verbindungen der allgemeinen Formel (III) oder (IV).

In den cyclischen Verbindungen (c) der allgemeinen Formel (III) und (IV)

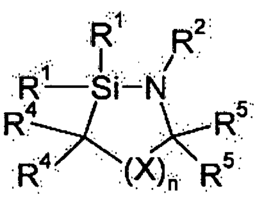

(III)

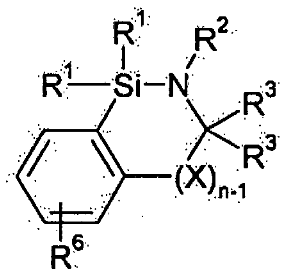

(IV)

sind die Variablen wie folgt definiert:

$R^1$ verschieden oder vorzugsweise gleich und gewählt aus
$C_1$-$C_{10}$-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl, ganz besonders bevorzugt Methyl,
$C_1$-$C_{10}$-Alkoxy, bevorzugt $C_1$-$C_4$-n-Alkoxy, beispielsweise Ethoxy, n-Propoxy, n-Butoxy und insbesondere Methoxy,
$C_3$-$C_{10}$-Cycloalkyl, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
Benzyl und
$C_6$-$C_{14}$-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
jeweils unsubstituiert oder ein- oder mehrfach substituiert mit $C_1$-$C_4$-Alkyl, insbesondere Methyl oder Isopropyl, oder mit Benzyl oder Phenyl,
Beispiele für substituiertes Phenyl sind beispielsweise para-Methylphenyl, 2,6-Dimethylphenyl und para-Biphenyl.

$R^2$ ist gewählt aus $COOR^7$, beispielsweise $COOCH_3$, $COOC_2H_5$,
$C_1$-$C_{10}$-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpröpyl, iso-Amyl, n-Hexyl, iso-Hexyl, sec.-Hexyl, n-Heptyf, n-Octyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl, ganz besonders bevorzugt Methyl, Ethyl oder iso-Propyl,
$C_2$-$C_{10}$-Alkenyl, insbesondere Vinyl, 1-Allyl, 2-Allyl und Homoallyl,
$C_3$-$C_{10}$-Cycloalkyl, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cyclo-

heptyl,
Benzyl,
$C_6$-$C_{14}$-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
jeweils unsubstituiert oder ein- oder mehrfach substituiert mit $C_1$-$C_4$-Alkyl, insbesondere Methyl oder Isopropyl, oder mit Benzyl oder Phenyl,

$R^3$, $R^4$ verschieden oder Vorzugsweise gleich und gewählt aus
$C_1$-$C_{10}$-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl, ganz besonders bevorzugt Ethyl,
$C_3$-$C_{10}$-Cycloalkyl, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
Benzyl,
$C_6$-$C_{14}$-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
jeweils unsubstituiert oder ein- oder mehrfach substituiert mit $C_1$-$C_4$-Alkyl, insbesondere Methyl oder Isopropyl, oder mit Benzyl oder Phenyl,
und insbesondere Wasserstoff,

oder $>C(R^3)_2$ ist eine >C=O-Gruppe.

Beispiele für bevorzugte $>C(R^3)_2$ sind weiterhin $CHC_6H_5$, $CH(CH_3)$, $C(CH_3)_2$ und insbesondere $CH_2$.

Bevorzugt sind $R^3$ und $R^4$ jeweils paarweise gleich und gewählt aus Wasserstoff und Methyl.

X verschieden oder gleich und gewählt aus Sauerstoff, Schwefel, N-$R^5$ und $C(R^6)_2$, wobei

$R^5$ ist gewählt aus
$C_1$-$C_{10}$-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl, ganz besonders bevorzugt Methyl,
$C_3$-$C_{10}$-Cycloalkyl, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
Benzyl und
$C_6$-$C_{14}$-Aryl, jeweils unsubstituiert oder ein- oder mehrfach substituiert mit $C_1$-$C_4$-Alkyl, insbesondere Methyl oder Isopropyl, oder mit Benzyl oder Phenyl,

$R^6$ gleich oder vorzugsweise verschieden und gewählt aus
Wasserstoff und
$C_1$-$C_{10}$-Alkyl, beispielsweise Methyl, Ethyl, n-Propyl, iso-Propyl, n-Butyl, iso-Butyl, sec.-Butyl, tert-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl;, besonders bevorzugt $C_1$-$C_4$-Alkyl wie Methyl, Ethyl, n-Propyl, iso-Propyl, n-Butyl, iso-Butyl, sec.-Butyl und tert.-Butyl, ganz besonders bevorzugt Methyl,
$C_3$-$C_{10}$-Cycloalkyl, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
Benzyl und
$C_6$-$C_{14}$-Aryl, jeweils unsubstituiert oder ein- oder mehrfach substituiert mit $C_1$-$C_4$-Alkyl, insbesondere Methyl oder Isopropyl, oder mit Benzyl oder Phenyl,
jeweils unsubstituiert oder ein- oder mehrfach substituiert mit $C_1$-$C_4$-Alkyl, Benzyl oder Phenyl,

$R^7$ gewählt aus $C_1$-$C_4$-Alkyl, wie Methyl, Ethyl, n-Propyl, iso-Propyl, n-Butyl, iso-Butyl, sec.-Butyl und tert.-Butyl, ganz besonders bevorzugt Methyl, Ethyl und Iso-Propyl,

n eine ganze Zahl im Bereich von 1 bis 3, vorzugsweise 1 oder 2 und insbesondere 1.

Besonders bevorzugt ist X gewählt aus $CHCH_3$ und $CH(CH_2CH_3)$.

Wenn in Verbindungen der Formel (IV) n = 1 gewählt wird, so entspricht sie der allgemeinen Formel (IV')

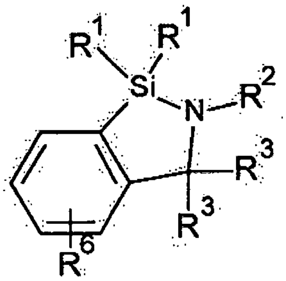

(IV')
(IV) mit n = 1

und eine Gruppe X im eigentlichen Sinne ist nicht anwesend.

In einer bevorzugten Ausführungsform der vorliegenden Erfindung wählt man Verbindung (c) aus Verbindungen der allgemeinen Formeln (III a), (III b), (IV a) und (IV b),

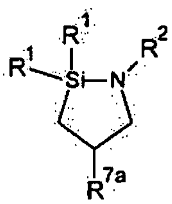

(III a)

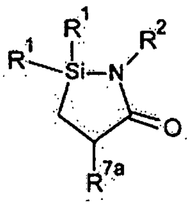

(III b)

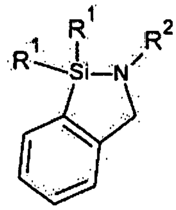

(IV a)

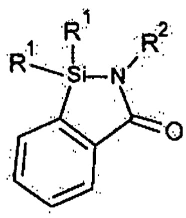

(IV b)

$R^1$ verschieden oder gleich und gewählt aus
$C_1$-$C_4$-Alkyl, wie Methyl, Ethyl, n-Propyl, iso-Propyl, n-Butyl, iso-Butyl, sec.-Butyl und tert.-Butyl, ganz besonders bevorzugt Methyl,
$C_1$-$C_4$-Alkoxy, wie Ethoxy, n-Propoxy, iso-Propoxy, n-Butoxy und insbesondere Methoxy,
und Phenyl,

$R^2$ gewählt aus $C_1$-$C_4$-Alkyl, wie Methyl, Ethyl, n-Propyl, iso-Propyl, n-Butyl, iso-Butyl, sec.-Butyl und tert.-Butyl, ganz besonders bevorzugt Methyl und tert.-Butyl,
$COOCH_3$. $COOC_2H_5$,
$C_2$-$C_3$-Alkenyl, beispielsweise $-CH=CH_2$, $-CH_2-CH=CH_2$, *(E)*-$CH=CH-CH_3$ und *(Z)*--$CH=CH-CH_3$,
und Phenyl

$R^{7a}$ gleich oder vorzugsweise verschieden und gewählt aus Wasserstoff und Methyl,

In einer bevorzugten Ausführungsform der vorliegenden Erfindung wählt man Verbindung (c) aus den folgenden Verbindungen:

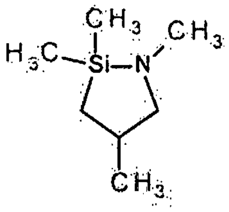

(III a.1)

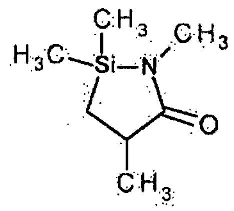

(III b.1)

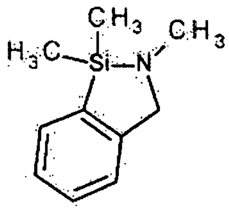

(IV a.1)

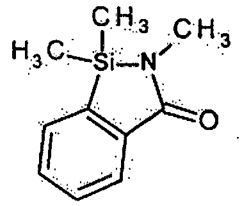

(IV b.1)

$(CH_3)_3Si\text{-}N(CH_3)_2$, $(CH_3)_3Si\text{-}N(C_2H_5)_2$, $(CH_3)_3Si\text{-}NHC(CH_3)_3$, $(CH_3)_3Si\text{-}NH(CH_2C_6H_5)$, $(CH_3)_3Si\text{-}N(iso\text{-}C_3H_7)_2$.

Verbindung (I a.1) hat die Formel

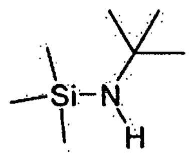

(I a.1)

Elektrolyt (C) kann weiterhin
im Bereich von null bis 30 ppm Wasser, bevorzugt 3 bis 25 ppm, besonders bevorzugt mindestens 5 ppm. Dabei werden unter ppm stets Gew.-ppm (parts per million) verstanden, bezogen auf gesamten Elektrolyten.

Die Anteile an Wasser lassen sich durch verschiedene, an sich bekannte Methoden bestimmen. Besonders gut geeignet ist die Karl-Fischer-Titration, beispielsweise nach DIN 51777 oder IS0760: 1978. Unter "null ppm Wasser" soll dabei verstanden werden, dass die Wassermengen unterhalb der Nachweisgrenze liegen.

Elektrolyt (C) kann weiterhin mindestens ein Additiv enthalten, kurz auch Additiv (d) genannt. Additive (d) können beispielsweise sein: aromatische Verbindungen, Sultone, cyclische exo-Methylencarbonate, Lithiumbisoxalatoborat (LiBOB) und Lithium(difluoroxalato)-borat (LiDFOB).

Als Beispiele für als Additiv (d) geeignete aromatische Verbindungen sind Biphenyl, Cyclohexylbenzol und 1,4-Dimethoxybenzol zu nennen.

Sultone können unsubstituiert oder substituiert sein. Als Beispiele für als geeignete Sultone sind Butansulton und Propylensulton (Propansulton), Formel (IX),

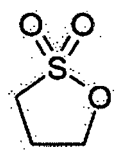

(IX)

und insbesondere Sultone mit mindestens einer C-C-Doppelbindung pro Molekül zu nennen. Ein Beispiel für substituierte Sultone ist 1-Phenyl-1,3-Butansulton.

Als Beispiele für als Additiv (d) geeignete exo-Methylen-Ethylencarbonate sind insbesondere Verbindungen der allgemeinen Formel (X) zu nennen.

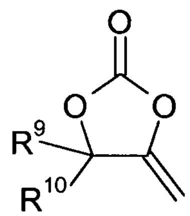

(X)

in denen $R^9$ und $R^{10}$ verschieden sein können oder gleich und gewählt aus $C_1$-$C_{10}$-Alkyl und Wasserstoff. In einer bevorzugten Ausführungsform sind $R^9$ und $R^{10}$ jeweils gleich Methyl. In einer anderen bevorzugten Ausführungsform der vorliegenden Erfindung sind $R^9$ und $R^{10}$ jeweils gleich Wasserstoff.

Weiterhin können Additive (d) acylische oder cyclische Alkane sein, die bevorzugt als Reinstoffe und bei einem Druck von 1 bar einen Siedepunkt von mindestens 36°C aufweisen. Beispiele sind Cyclohexan, Cycloheptan und Cyclododekan. Weiterhin kommen organische Ester anorganischer Säuren, zum Beispiel Methylester oder Ethylester der Phosphorsäure oder Schwefelsäure, in Betracht.

In einer Ausführungsform der vorliegenden Erfindung enthält Elektrolyt (C) über aprotisches organisches Lösungsmittel (a), Lithiumsalz (b), Verbindung (c), Wasser und gegebenenfalls Additiv (d) hinaus keine weiteren Komponenten.

In einer Ausführungsform der vorliegenden Erfindung weist Elektrolyt (C) folgende Zusammensetzung auf:

(a) insgesamt im Bereich von 50 bis 99,5 Gew.-%, bevorzugt 60 bis 95 Gew.-%, besonders bevorzugt 70 bis 90 Gew.-% aprotisches organisches Lösungsmittel (a),
(b) im Bereich 0,1 bis 25 Gew.-%, bevorzugt 5 bis 18 Gew.-% Lithiumsalz (b),
(c) von 0,01 bis 5 Gew.-%, bevorzugt 0,08 bis 3 Gew.-%, besonders bevorzugt 0,15 bis 2 Gew.-% Verbindung (c),
(d) insgesamt null bis insgesamt 10 Gew.-%, bevorzugt 0,01 bis 5 Gew.-%, besonders bevorzugt 0,4 bis 2 Gew.-% Additiv(e) (d), und
(e) null bis 50 ppm, bevorzugt 3 bis 25 ppm und besonders bevorzugt mindestens 5 ppm Wasser,

wobei Angaben in Gew.-% bzw. ppm jeweils auf gesamten Elektrolyt (C) bezogen sind.

Erfindungsgemäße Lithium-Ionen-Batterien können weiterhin an sich übliche Bestandteile umfassen, beispielsweise einen oder mehrere Separatoren, eine oder mehrere Ableitplättchen (Stromableiter) und ein Gehäuse.

Erfindungsgemäß eingesetzte Elektrolyte (C) kann man beispielsweise wie folgt erhalten:

($\alpha$) man stellt mindestens ein aprotisches organisches Lösungsmittel (a) bereit, kurz Schritt ($\alpha$) genannt,
($\beta$) gegebenenfalls vermischt man mit mindestens einem weiteren aprotischen organischen Lösungsmittel (a), kurz auch Schritt ($\beta$) genannt, und zwar so, dass man eine bei Normalbedingungen flüssige Mischung erhält,
($\gamma$) gegebenenfalls vermischt man mit einem oder mehreren Additiven (d), kurz Schritt ($\gamma$) genannt,
($\delta$) man trocknet, kurz Schritt ($\delta$) genannt, und
($\varepsilon$) man vermischt mit Verbindung (c) und gegebenenfalls mit mindestens einem Additiv (d) und gegebenenfalls mit mindestens einem Lithiumsalz (b), kurz Schritt ($\varepsilon$) genannt.

Dabei kann man die Schritte ($\alpha$) bis ($\varepsilon$) in der vorstehend genannten Reihenfolge durchführen oder in einer anderen Reihenfolge. So ist es beispielsweise möglich, sich im Wesentlichen an die vorstehend genannte Reihenfolge der Schritte ($\alpha$) bis ($\varepsilon$) zu halten, aber Schritt ($\delta$) unmittelbar vor Schritt ($\gamma$) durchführt.

In einer anderen Variante geht man so vor, dass man sich im Wesentlichen an die vorstehend genannte Reihenfolge der Schritte ($\alpha$) bis ($\varepsilon$) hält, aber Schritt ($\gamma$) unmittelbar vor Schritt ($\beta$) durchführt.

Lösungsmittel (a), Additive (d), Verbindung (c) und Lithiumsalze (b) sind vorstehend definiert.

Die Schritte ($\alpha$) bis ($\varepsilon$) werden im Folgenden näher beschrieben.

Das Vermischen von Lösungsmittel (a), Verbindung (c), Lithiumsalz (b) und gegebenenfalls Additiv (d) kann man bei beliebigen Temperaturen durchführen.

Schritt ($\alpha$):

Man stellt ein oder mehrere Lösungsmittel (a) bereit. Einzelne Lösungsmittel (a) oder alle Lösungsmittel (a) kann man in getrockneten Zustand bereitstellen, beispielsweise mit einem Wassergehalt von 1 bis 50 ppm, oder mit einem höheren Wassergehalt.

Schritte ($\beta$), ($\gamma$) und ($\varepsilon$): Vermischungsschritte

In einer Ausführungsform der vorliegenden Erfindung vermischt man jeweils bei Temperaturen im Bereich von 10 bis 100°C, besonders bevorzugt bei Zimmertemperatur.

In einer Ausführungsform der vorliegenden Erfindung vermischt man bei einer Temperatur, die mindestens 1°C über dem Schmelzpunkt des am höchsten schmelzenden Lösungsmittels (a) liegt.

Die Temperaturobergrenze für das Vermischen wird durch die Flüchtigkeit der am leichtesten flüchtigen Lösungsmittels (a) bestimmt. Vorzugsweise vermischt man bei einer Temperatur unterhalb des Siedepunkts der am leichtesten flüchtigen Lösungsmittels (a).

Man kann bei beliebigem Druck vermischen, bevorzugt ist Normaldruck. Die Dauer des Vermischens kann man beispielsweise im Bereich von 5 Minuten bis zu 24 Stunden wählen.

In Schritt (β) wählt man die Mengenverhältnisse von Lösungsmittel(n) (a) so, dass man eine bei Zimmertemperatur flüssige Mischung erhält. Bevorzugt wählt man die Mengenverhältnisse von Lösungsmittel(n) (a) so, dass man eine bei 0°C flüssige Mischung erhält. Besonders bevorzugt wählt man die Mengenverhältnisse von Lösungsmittel(n) (a) so, dass man eine bei -15°C flüssige Mischung erhält. Die Überprüfung, ob die Mischung aus Schritt (β) flüssig ist, kann beispielsweise durch einfache optische Inspektion erfolgen, beispielsweise durch visuelle Inspektion.

Beispielsweise kann man durch Zugabe von Diethylcarbonat oder Methylethylcarbonat den Schmelzpunkt einer Mischung senken.

Das Vermischen erfolgt vorzugsweise unter wasserfreien Bedingungen, also unter Luft- und insbesondere unter Feuchtigkeitsausschluss, beispielsweise unter trockener Luft. Bevorzugt erfolgt das Vermischen unter Luftausschluss (Inertbedingungen), beispielsweise unter trockenem Stickstoff oder trockenem Edelgas.

Schritt (δ):

In Schritt (δ) trocknet man. Man kann nach oder vorzugsweise vor Zugabe von Verbindung der allgemeinen Formel (I) oder (II), gegebenenfalls von Additiv(en) (d) und gegebenenfalls von Lithiumsalz(en) (b) trocknen.

Das Trocknen kann nach an sich üblichen Methoden über einem Trockenmittel erfolgen, bevorzugt trocknet man über Molekularsieb. Molekularsiebe werden vorzugsweise aus natürlichen und synthetischen Zeolithen gewählt, die in Form von Kugeln (Perlen), als Pulver oder Stäbchen vorliegen können. Bevorzugt setzt man Molekularsieb 4Å, besonders bevorzugt Molekularsieb 3Å ein.

Das eigentliche Trocknen kann man beispielsweise durch Rühren über dem oder den Trockenmitteln durchführen.

Vorzugsweise lässt man Molekularsieb auf Lösungsmittel (a) in Abwesenheit von chemischen Trocknungsmitteln einwirken. Unter chemischen Trocknungsmitteln werden im Rahmen der vorliegenden Erfindung stark saure, alkalische oder stark reduzierend wirkende Trocknungsmittel, insbesondere gewählt aus niedermolekularen Verbindungen, Salzen und Elementen verstanden. Bekannte saure Trocknungsmittel sind beispielsweise Aluminiumalkyle wie beispielsweise Trimethylaluminium, weiterhin Phosphorpentoxid und konzentrierte Schwefelsäure. Bekannte basische Trocknungsmittel sind beispielsweise Kaliumcarbonat und $CaH_2$. Bekannte reduzierend wirkende Trocknungsmittel sind beispielsweise elementares Natrium, elementares Kalium und Natrium-Kalium-Legierung.

In einer Ausführungsform der vorliegenden Erfindung führt man Schritt (δ) bei einer Temperatur im Bereich von 15 bis 40°C durch, bevorzugt 20 bis 30°C.

In einer Ausführungsform der vorliegenden Erfindung beträgt die Einwirkzeit in Schritt (δ) einige Minuten, beispielsweise mindestens 5 Minuten, bis mehrere Tage, bevorzugt maximal 24 Stunden, besonders bevorzugt eine bis 6 Stunden.

Während der Durchführung von Schritt (δ) kann man ein- oder mehrmals etwas Lösungsmittelgemisch entnehmen, um den Trocknungsvorgang mittels Karl-Fischer-Titration zu verfolgen.

Es ist bevorzugt, nur wenig zu rühren oder zu schütteln. Zu heftiges Rühren bzw. zu heftiges Schütteln kann zum teilweisen Zerschlagen des Molekularsiebes führen, was zu Problemen beim Abfiltrieren Anlass geben kann.

Anschließend trennt man das oder die Trockenmittel ab, beispielsweise durch Abdestillieren des oder der Lösungsmittel (a) und insbesondere durch Dekantieren oder Filtrieren.

Ein weiterer Gegenstand der vorliegenden Erfindung ist die Verwendung von erfindungsgemäßen elektrochemischen Zellen in Lithium-Ionen-Batterien. Insbesondere lassen sich erfindungsgemäße elektrochemische Zellen in solchen Lithium-Ionen-Batterien einsetzen bzw. verwenden, in denen während der Herstellung und/oder bei der Nutzung der betreffenden elektrochemischen Zelle zumindest zeitweise eine Potentialdifferenz zwischen zumindest einer Anode und zumindest einer Kathode von mindestens 4,5 Volt erreicht wird.

In einer Ausführungsform der vorliegenden Erfindung verwendet man erfindungsgemäße elektrochemische Zellen zum Betreiben von Kraftfahrzeugen, alleine oder in Kombination mit einem Verbrennungsmotor.

In einer anderen Ausführungsform der vorliegenden Erfindung verwendet man erfindungsgemäße elektrochemische Zellen zur Energiespeicherung in elektrischen Telekommunikationsgeräten

Ein weiterer Gegenstand der vorliegenden Erfindung ist ein Verfahren zur Herstellung von erfindungsgemäßen elektrochemischen Zellen. Zur Herstellung von erfindungsgemäßen elektrochemischen Zellen kann man beispielsweise so vorgehen, dass man eine Kathode (A) und eine Anode (B) in einem Behältnis miteinander kombiniert und mit Elektrolyt (C) versetzt. Als Behältnis können beispielsweise Gehäuse dienen. Natürlich kann man gleichzeitig oder nach dem Kombinieren von Kathode (A) und Anode (B) mit anderen Batteriebestandteilen kombinieren, beispielsweise mit einem oder mehrere Separatoren oder einem oder mehrere Ableitplättchen (Stromableiter).

Das Versetzen mit Elektrolyt (C) kann beispielsweise durch Ein- oder Befüllen ausgeführt werden. In einer bevorzugten Variante geht man so vor, dass man vor dem Versetzen mit Elektrolyt den Innendruck der betreffenden

Zelle auf Werte unter 25000 Pa (Pascal) absenkt.
Die Erfindung wird durch Arbeitsbeispiele erläutert.

Man verwendete stets folgende Elektroden:

Kathode (A.1): man verwendete eine Lithium-Nickel-Mangan-Spinell-Elektrode, die wie folgt hergestellt wurden. Man vermischte miteinander:

85 % $LiMn_{1,5}Ni_{0,5}O_4$
6 % PVdF, kommerziell erhältlich als Kynar Flex® 2801 der Arkema Group,
6 % Ruß, BET-Oberfläche von 62 $m^2/g$, kommerziell erhältlich als "Super P Li" der Firma Timcal,
3 % Graphit, kommerziell erhältlich als KS6 der Fa. Timcal;

in einem verschraubbaren Gefäß. Unter Rühren versetzte man mit so viel N-Methylpyrrolidon (NMP), bis man eine zähe klumpenfreie Paste erhalten hatte. Man rührte 16 Stunden.

Dann rakelte man die so erhaltene Paste auf 20 μm dicke Aluminiumfolie auf und trocknete 16 Stunden lang in einem Vakuumtrockenschrank bei 120 °C. Die Dicke der Beschichtung betrug nach dem Trocknen 30 μm. Anschließend stanzte man kreisscheibenförmige Segmente aus, Durchmesser: 12 mm.

Anode (B.1): Man vermischte miteinander

91 % Graphit ConocoPhillips C5
6 % PVdF, kommerziell erhältlich als Kynar Flex® 2801 der Arkema Group,
3 % Ruß, BET-Oberfläche von 62 $m^2/g$, kommerziell erhältlich als "Super P Li" der Firma Timcal in einem verschraubbaren Gefäß. Unter Rühren versetzte man mit so viel NMP, bis man eine zähe klumpenfreie Paste erhalten hatte. Man rührte 16 Stunden.

Dann rakelte man die so erhaltene Paste auf 20 μm dicke Kupferfolie auf und trocknete 16 Stunden lang in einem Vakuumtrockenschrank bei 120 °C. Die Dicke der Beschichtung betrug nach dem Trocknen 35 μm. Anschließend stanzte man kreisscheibenförmige Segmente aus, Durchmesser: 12 mm.

Als Testzelle wurde ein Aufbau gemäß Abbildung 1 verwendet. Beim Zusammenbau der Zelle wurde diese von unten nach oben gemäß der schematischen Abbildung 1 zusammengesetzt. In Abbildung 1 befindet sich die Anodenseite oben, die Kathodenseite unten.

Die Erläuterungen in Abbildung 1 bedeuten:

1, 1’ Stempel
2, 2’ Mutter
3, 3’ Dichtungsring - jeweils doppelt, der jeweils zweite, etwas kleinere Dichtungsring ist hier nicht gezeigt
4 Spiralfeder
5 Stromableiter aus Stahl
6 Gehäuse

Auf den Stempel der Kathodenseite 1’ wurde Kathode (A.1) aufgebracht. Anschließend wurde ein Separator aus Glasfaser, Dicke des Separators: 0,5 mm, auf Kathode (A.1) gelegt. Auf den Separator wurde die zu testende Mischung geträufelt. Anode (B.1) wurde auf die getränkten Separatoren gelegt. Als Stromableiter 5 wurde ein Edelstahlplättchen benutzt, welches direkt auf die Anode aufgebracht wurde. Anschließend wurden die Dichtungen 3 und 3’ hinzugefügt und die Bestandteile der Testzelle zugeschraubt. Mittels der als Spiralfeder 4 ausgebildeten Stahlfeder und durch den Druck, welcher durch die Verschraubung mit Anodenstempel 1 erzeugt wurde, wurde der elektrische Kontakt gewährleistet.

II.1 Herstellung einer erfindungsgemäßen elektrochemischen Zelle EZ.1 und Testung

Whatman (GF/D) wurde als Separator eingesetzt und dazu in einer Argon-gefüllten Glove-box mit Elektrolyt betropft und zwischen einer Kathode (A.1) und einer Anode (B.1) positioniert, so dass sowohl die Anode als auch die Kathode direkten Kontakt zum Separator hatte. Man setzte Elektrolyt E-1 zu und erhielt erfindungsgemäße elektrochemische Zelle EZ.1.

Als Testmischung ("Elektrolyt") E-1 setzte man ein:

1 M $LiPF_6$, gelöst in Ethylencarbonat und Ethylmethylcarbonat im Massenverhältnis 1:1, und 2 Gew.-% Verbindung (I a.1), bezogen auf Summe an $LiPF_6$, Ethylencarbonat und Ethylmethylcarbonat.

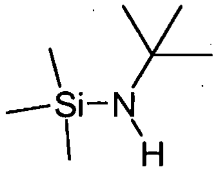

(I a.1)

Dazu wurde eine Mischung von Ethylencarbonat und Ethylmethylcarbonat (1:1, s. o.) über Molekularsieb getrocknet. Dann wurde Verbindung (I a.1) in der Mischung gelöst. Anschließend wurde diese Mischung nochmals über Molekularsieb getrocknet. Zum Schluss wurde $LiPF_6$ zu dieser Mischung gegeben und man erhielt Elektrolyt E-1 ("Elektrolyt").

Dazu wurde eine Mischung von Ethylencarbonat und Ethylmethylcarbonat (1:1, s. o.) über Molekularsieb getrocknet. Dann wurde Verbindung (I a.1) in der Mischung gelöst. Anschließend wurde diese Mischung nochmals über Molekularsieb getrocknet. Zum Schluss wurde $LiPF_6$ zu dieser Mischung gegeben und man erhielt Elektrolyt E-1 ("Elektrolyt").

E-1 enthielt 10 ppm Wasser, bestimmt durch Karl-Fischer-Titration nach DIN 51777 bzw. ISO760: 1978 mit coulometrischer Detektion.

Der Versuch wurde wiederholt, aber mit einer Elektrolytlösung, die kein (I a.1) enthielt. Man erhielt elektrochemische Vergleichszelle V-EZ.2.

II. Elektrochemische Charakterisierung der Zelle:

Die elektrochemischen Untersuchungen von EZ.1 und V-EZ.2 erfolgte zwischen 4,25 V und 4,8 V.

Die ersten zwei Zyklen wurden zwecks Formierung bei 0,2C-Rate gefahren; die Zyklen Nr. 3 bis Nr. 50 wurden bei 1C-Rate gezykelt, danach folgten wieder 2 Zyklen mit 0,2C-Rate gefolgt von 48 Zyklen mit 1C-Rate usw. Das Laden bzw. Entladen der Zelle wurde mit Hilfe eines "MAC-COR Battery Tester" bei Raumtemperatur durchgeführt.

Es konnte gezeigt werden, dass die Batterie-Kapazität über wiederholtes Laden und Entladen sehr stabil blieb.

Die Ergebnisse sind in Abbildung 2 dargestellt.

## Patentansprüche

1. Elektrochemische Zelle, enthaltend

(A) mindestens eine Kathode, die mindestens eine lithiierte Mn-haltige Verbindung aufweist, die einen Mn-Gehalt von 60 bis 80 mol-% aufweist, bezogen auf in Kathode (A) enthaltenes Übergangsmetall, wobei die lithiierte Mn-haltige Verbindung gewählt wird aus Verbindungen der Formeln

$$LiMn_{1-h}Fe_hPO_4$$

mit

$$0{,}2 \leq h \leq 0{,}4,$$

Schichtoxiden der Formel $Li_{(1+y)}[Ni_aCo_bMn_c]_{(1-y)}O_2$
Wobei

y gewählt ist aus null bis 0,3,
c im Bereich von 0,6 bis 0,8 liegt, a, b jeweils gleich oder verschieden sein können und im Bereich von 0,0 bis 0,4 liegen,
und wobei gilt: a + b + c = 1
und Verbindung der allgemeinen Formel (I),

$Li_{1+t}M_{2-t}O_{4-d}$ (I)

in der die Variablen wie folgt definiert sind:

d liegt im Bereich von null bis 0,4,
t liegt im Bereich von null bis 0,4,
M ist zwei oder mehrere Metalle der Gruppen 3 bis 12 des Periodensystems der Elemente, wobei mehr als 60 mol-% von M Mangan ist,

(B) mindestens eine Anode, die Kohlenstoff in elektrisch leitfähiger Modifikation aufweist,
(C) mindestens einen Elektrolyten, der enthält

(a) mindestens ein aprotisches organisches Lösungsmittel,
(b) mindestens ein Lithiumsalz, **gekennzeichnet durch**
(c) mindestens eine organische Verbindung, die gewählt ist aus Verbindungen der allgemeinen Formeln (III) und (IV) und aus (I a.1),

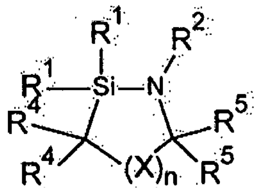

(III)

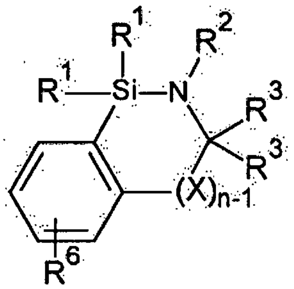

(IV)

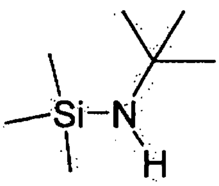

(I a.1)

in denen die Variablen wie folgt definiert sind:

$R^1$ verschieden oder gleich und gewählt aus $C_1$-$C_{10}$-Alkyl, $C_1$-$C_{10}$-Alkoxy, $C_3$-$C_{10}$-Cycloalkyl, Benzyl und $C_6$-$C_{14}$-Aryl, jeweils unsubstituiert oder ein- oder mehrfach substituiert mit $C_1$-$C_4$-Alkyl, Benzyl oder Phenyl,
$R^2$ gewählt aus $COOR^7$, $C_1$-$C_{10}$-Alkyl, $C_2$-$C_{10}$-Alkenyl, $C_3$-$C_{10}$-Cycloalkyl, Benzyl, $C_6$-$C_{14}$-Aryl, jeweils unsubstituiert oder ein- oder mehrfach substituiert mit $C_1$-$C_4$-Alkyl, Benzyl oder Phenyl,
$R^3$, $R^4$ verschieden oder gleich und gewählt aus Wasserstoff, $C_1$-$C_{10}$-Alkyl, $C_3$-$C_{10}$-Cycloalkyl, Benzyl und $C_6$-$C_{14}$-Aryl, jeweils unsubstituiert oder ein- oder mehrfach substituiert mit $C_1$-$C_4$-Alkyl, Benzyl oder Phenyl,
oder $>C(R^3)_2$ ist eine >C=O-Gruppe,

X gegebenenfalls verschieden oder gleich und gewählt aus Sauerstoff, Schwefel, N-$R^5$ und $C(R^3)_2$, wobei
$R^5$ gewählt aus $C_1$-$C_{10}$-Alkyl, $C_3$-$C_{10}$-Cycloalkyl, Benzyl und $C_6$-$C_{14}$-Aryl, jeweils unsubstituiert oder ein- oder mehrfach substituiert mit $C_1$-$C_4$-Alkyl, Benzyl oder Phenyl,
$R^6$ verschieden oder gleich und gewählt aus Wasserstoff, $C_1$-$C_{10}$-Alkyl, $C_3$-$C_{10}$-Cycloalkyl, Benzyl und $C_6$-$C_{14}$-Aryl, jeweils unsubstituiert oder ein- oder mehrfach substituiert mit $C_1$-$C_4$-Alkyl, Benzyl oder Phenyl,
$R^7$ gewählt aus $C_1$-$C_4$-Alkyl,
n eine ganze Zahl im Bereich von 1 bis 3.

2. Elektrochemische Zelle nach Anspruch 1, **dadurch gekennzeichnet, dass** es sich bei lithiierter Mn-haltiger Verbindung um einen lithiierten Mn-haltigen Spinell handelt.

3. Elektrochemische Zelle nach Anspruch 1 oder 2, **dadurch gekennzeichnet, dass** Anode (B) gewählt wird aus Graphitanoden.

4. Elektrochemische Zelle nach einem der Ansprüche 1 bis 3, **dadurch gekennzeichnet, dass** man aprotisches organisches Lösungsmittel (a) wählt aus organischen Carbonaten, cyclisch oder acyclisch, Di-$C_1$-$C_{10}$-alkylethern, Di-$C_1$-$C_4$-Alkyl-$C_2$-$C_6$-alkylenethern, und cyclischen und acyclischen Acetalen und Ketalen.

5. Elektrochemische Zelle nach einem der Ansprüche 1 bis 4, **dadurch gekennzeichnet, dass** man Verbindung der allgemeinen Formel (III) bzw. (IV) wie folgt wählt:

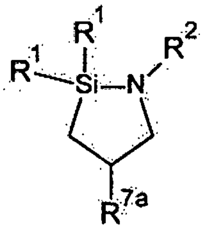
(III a)

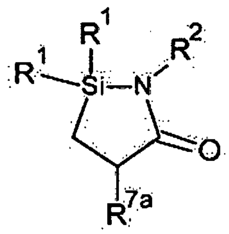
(III b)

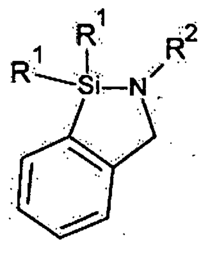
(IV a)

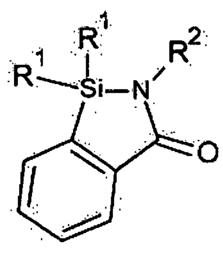
(IV b)

$R^1$ jeweils gleich und gewählt aus $C_1$-$C_4$-Alkyl, $C_1$-$C_4$-Alkoxy und Phenyl,
$R^2$ gewählt aus $C_1$-$C_4$-Alkyl, $COOCH_3$, $COOC_2H_5$, $C_2$-$C_3$-Alkenyl und Phenyl
$R^{7a}$ gewählt aus Wasserstoff und Methyl.

6. Verwendung von elektrochemischen Zellen nach einem der Ansprüche 1 bis 5 in Lithium-Ionen-Batterien.

7. Verwendung nach Anspruch 6, wobei während der Herstellung und/oder bei der Nutzung der betreffenden elektrochemischen Zelle zumindest zeitweise eine Potentialdifferenz zwischen zumindest einer Anode und zumindest einer Kathode von mindestens 4,5 Volt erreicht wird.

8. Verwendung von elektrochemischen Zellen nach einem der Ansprüche 1 bis 5 zum Betreiben von Kraftfahrzeugen.

9. Verwendung von elektrochemischen Zellen nach einem der Ansprüche 1 bis 5 zur Energiespeicherung in elektrischen Telekommunikationsgeräten.

10. Verfahren zur Herstellung von elektrochemischen Zellen nach einem der Ansprüche 1 bis 5, **dadurch gekennzeichnet, dass** man eine Kathode (A) und eine Anode (B) in einem Behältnis miteinander kombiniert und mit Elektrolyt (C) versetzt.

11. Verfahren nach Anspruch 10, **dadurch gekennzeichnet, dass** man vor dem Versetzen mit Elektrolyt den Innendruck der betreffenden Zelle auf Werte unter 25000 Pa (Pascal) absenkt.

## Claims

1. An electrochemical cell comprising

(A) at least one cathode comprising at least one lithiated Mn-containing compound having an Mn content of from 60 to 80 mol%, based on transition metal in cathode (A), wherein the lithiated Mn-containing compound is selected from compounds of the formulae

$$LiMn_{1-h}Fe_hPO_4$$

where $0.2 \leq h \leq 0.4$,
layered oxides of the formula $Li_{(1+y)}[Ni_aCO_bMn_c]_{(1-y)}O_2$
where

y is selected from zero to 0.3,
c is from 0.6 to 0.8, a and b may each be the same or different and are in the range from 0.0 to 0.4, subject to the proviso: a + b + c = 1 and compound of the general formula (I)

$$Li_{1+t}M_{2-t}O_{4-d} \quad (I)$$

where

d is from zero to 0.4,
t is from zero to 0.4,
M is two or more metals from groups 3 to 12 of the periodic table, wherein more than 60 mol% of M is manganese,

(B) at least one anode comprising carbon in electrically conductive form,
(C) at least one electrolyte comprising

(a) at least one aprotic organic solvent,
(b) at least one lithium salt, **characterized by**
(c) at least one organic compound which is selected from compounds of the general formulae (III) and (IV) and from (I a.1):

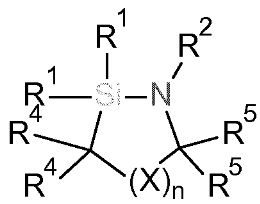

(III)

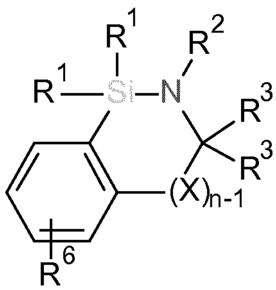

(IV)

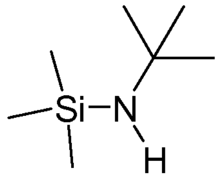

(I a.1)

where

$R^1$ in each occurrence is the same or different and selected from $C_1$-$C_{10}$-alkyl, $C_1$-$C_{10}$-alkoxy, $C_3$-$C_{10}$-cycloalkyl, benzyl and $C_6$-$C_{14}$-aryl, each unsubstituted or substituted one or more times with $C_1$-$C_4$-alkyl, benzyl or phenyl,

$R^2$ is selected from $COOR^7$, $C_1$-$C_{10}$-alkyl, $C_2$-$C_{10}$-alkenyl, $C_3$-$C_{10}$-cycloalkyl, benzyl, $C_6$-$C_{14}$-aryl, each unsubstituted or substituted one or more times with $C_1$-$C_4$-alkyl, benzyl or phenyl,

$R^3$ and $R^4$ are the same or different and are each selected from hydrogen, $C_1$-$C_{10}$-alkyl, $C_3$-$C_{10}$-cycloalkyl, benzyl and $C_6$-$C_{14}$-aryl, each unsubstituted or substituted one or more times with $C_1$-$C_4$-alkyl, benzyl or phenyl, or $>C(R^3)_2$ is a $>C=O$ group,

X, if present at all or in multiple occurrence, is the same or different and selected from oxygen, sulfur, N-$R^5$ and $C(R^3)_2$, where

$R^5$ is selected from $C_1$-$C_{10}$-alkyl, $C_3$-$C_{10}$-cycloalkyl, benzyl and $C_6$-$C_{14}$-aryl, each unsubstituted or substituted one or more times with $C_1$-$C_4$-alkyl, benzyl or phenyl,

$R^6$ in each occurrence is the same or different and selected from hydrogen, $C_1$-$C_{10}$-alkyl, $C_3$-$C_{10}$-cycloalkyl, benzyl and $C_6$-$C_{14}$-aryl, each unsubstituted or substituted one or more times with $C_1$-$C_4$-alkyl, benzyl or phenyl,

$R^7$ is selected from $C_1$-$C_4$-alkyl,

n is an integer from 1 to 3.

**2.** The electrochemical cell according to claim 1 wherein said lithiated Mn-containing compound is a lithiated Mn-containing spinel.

**3.** The electrochemical cell according to claim 1 or 2 wherein said anode (B) is selected from graphite anodes.

**4.** The electrochemical cell according to any one of claims 1 to 3 wherein said aprotic organic solvent (a) is selected from organic carbonates (cyclic or acyclic), di-$C_1$-$C_{10}$-alkyl ethers, di-$C_1$-$C_4$-alkyl-$C_2$-$C_6$-alkylene ethers, and cyclic and acyclic acetals and ketals.

**5.** The electrochemical cell according to any one of claims 1 to 4 wherein compound of general formula (III) or (IV) is selected as follows:

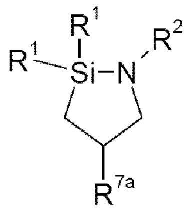

(III a)

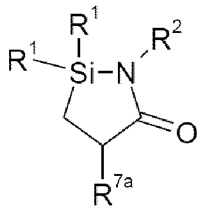

(III b)

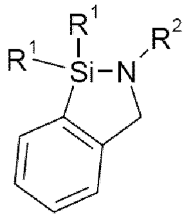

(IV a)

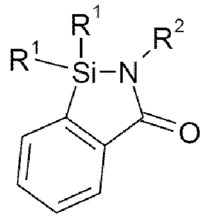

(IV b)

$R^1$ in each occurrence is the same and selected from $C_1$-$C_4$-alkyl, $C_1$-$C_4$-alkoxy and phenyl,
$R^2$ is selected from $C_1$-$C_4$-alkyl, $COOCH_3$, $COOC_2H_5$, $C_2$-$C_3$-alkenyl and phenyl,
$R^{7a}$ is selected from hydrogen and methyl.

**6.** The use of electrochemical cells according to any one of claims 1 to 5 in lithium ion batteries.

**7.** The use according to claim 6 wherein a potential difference of at least 4.5 volts is reached between at least one anode and at least one cathode at least temporarily during the production and/or use of the electrochemical cell in question.

**8.** The use of electrochemical cells according to any one of claims 1 to 5 for driving motor vehicles.

**9.** The use of electrochemical cells according to any one of claims 1 to 5 for energy storage in electrical telecommunications equipment.

**10.** A process for producing electrochemical cells according to any one of claims 1 to 5, which comprises a cathode (A) and an anode (B) being combined with each other in a receptacle and admixed with electrolyte (C).

**11.** The process according to claim 10 wherein the admixing with electrolyte is preceded by the internal pressure of the cell in question being lowered to values below 25 000 Pa (pascal).

## Revendications

**1.** Cellule électrochimique, contenant

(A) au moins une cathode, qui comprend au moins un composé contenant Mn lithié, qui présente une teneur en Mn de 60 à 80 % en moles, par rapport au métal de transition contenu dans la cathode (A), le composé contenant Mn lithié étant choisi parmi les composés de formule

$$LiMn_{1-h}Fe_hPO_4$$

avec $0{,}2 \leq h \leq 0{,}4$,
les oxydes stratifiés de formule $Li_{(1+y)}[Ni_aCO_bMn_c]_{(1-y)}O_2$ dans laquelle

y est choisi parmi zéro à 0,3,

c se situe dans la plage allant de 0,6 à 0,8, a, b peuvent chacun être identiques ou différents et se situent dans la plage allant de 0,0 à 0,4,
et a + b + c = 1

et les composés de formule générale (I)

$$Li_{1+t}M_{2-t}O_{4-d} \qquad (I)$$

dans laquelle les variables sont définies de la manière suivante :

d se situe dans la plage allant de zéro à 0,4,
t se situe dans la plage allant de zéro à 0,4,
M représente deux métaux ou plus des groupes 3 à 12 du tableau périodique des éléments, plus de 60 % en moles de M étant le manganèse,

(B) au moins une anode, qui comprend du carbone sous forme électriquement conductrice,
(C) au moins un électrolyte, qui contient

(a) au moins un solvant organique aprotique,
(b) au moins un sel de lithium, **caractérisé par**
(c) au moins un composé organique, qui est choisi parmi les composés de formule générale (III) et (IV) et parmi (Ia.1)

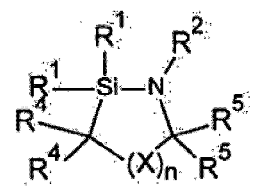

(III)

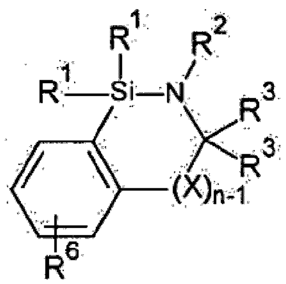

(IV)

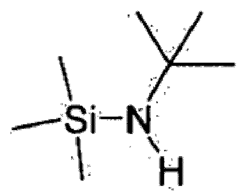

(I a.1)

dans lesquelles les variables sont définies de la manière suivante :

les $R^1$ sont identiques ou différents et choisis parmi alkyle en $C_1$-$C_{10}$, alcoxy en $C_1$-$C_{10}$, cycloalkyle en $C_3$-$C_{10}$, benzyle et aryle en $C_6$-$C_{14}$, chacun non substitués ou substitués une ou plusieurs fois avec alkyle en $C_1$-$C_4$, benzyle ou phényle,
$R^2$ est choisi parmi $COOR^7$, alkyle en $C_1$-$C_{10}$, alcényle en $C_2$-$C_{10}$, cycloalkyle en $C_3$-$C_{10}$, benzyle, aryle en $C_6$-$C_{14}$, chacun non substitués ou substitués une ou plusieurs fois avec alkyle en $C_1$-$C_4$,

benzyle ou phényle, $R^3$, $R^4$ sont identiques ou différents et choisis parmi hydrogène, alkyle en $C_1$-$C_{10}$, cycloalkyle en $C_3$-$C_{10}$, benzyle et aryle en $C_6$-$C_{14}$, chacun non substitués ou substitués une ou plusieurs fois avec alkyle en $C_1$-$C_4$, benzyle ou phényle,
ou >$C(R^3)_2$ représente un groupe >C=O,
les X sont éventuellement identiques ou différents et choisis parmi oxygène, soufre, N-$R^5$ et $C(R^3)_2$, $R^5$ étant choisi parmi alkyle en $C_1$-$C_{10}$, cycloalkyle en $C_3$-$C_{10}$, benzyle et aryle en $C_6$-$C_{14}$, chacun non substitués ou substitués une ou plusieurs fois avec alkyle en $C_1$-$C_4$, benzyle ou phényle,
les $R^6$ sont identiques ou différents et choisis parmi hydrogène, alkyle en $C_1$-$C_{10}$, cycloalkyle en $C_3$-$C_{10}$, benzyle et aryle en $C_6$-$C_{14}$, chacun non substitués ou substitués une ou plusieurs fois avec alkyle en $C_1$-$C_4$, benzyle ou phényle,
$R^7$ est choisi parmi alkyle en $C_1$-$C_4$,
n est un nombre entier dans la plage allant de 1 à 3.

**2.** Cellule électrochimique selon la revendication 1, **caractérisée en ce que** le composé contenant Mn lithié est un spinelle contenant Mn lithié.

**3.** Cellule électrochimique selon la revendication 1 ou 2, **caractérisée en ce que** l'anode (B) est choisie parmi les anodes en graphite.

**4.** Cellule électrochimique selon l'une quelconque des revendications 1 à 3, **caractérisée en ce que** le solvant organique aprotique (a) est choisi parmi les carbonates organiques, cycliques ou acycliques, les éthers de di-alkyle en $C_1$-$C_{10}$, les éthers de di-alkyle en $C_1$-$C_4$-alkylène en $C_2$-$C_6$, et les acétals et cétals cycliques et acycliques.

**5.** Cellule électrochimique selon l'une quelconque des revendications 1 à 4, **caractérisée en ce que** le composé de formule générale (III) ou (IV) est choisi de la manière suivante :

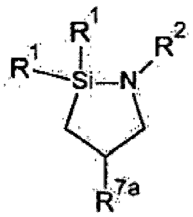

(III a)

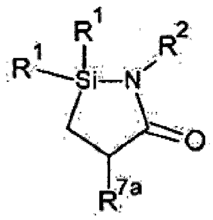

(III b)

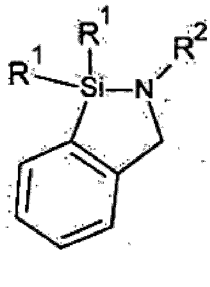

(IV a)

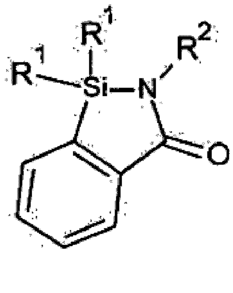

(IV b)

les $R^1$ sont chacun identiques et choisis parmi alkyle en $C_1$-$C_4$, alcoxy en $C_1$-$C_4$ et phényle,
$R^2$ est choisi parmi alkyle en $C_1$-$C_4$, $COOCH_3$, $COOC_2H_5$, alcényle en $C_2$-$C_3$ et phényle,
$R^{7a}$ est choisi parmi hydrogène et méthyle.

**6.** Utilisation de cellules électrochimiques selon l'une quelconque des revendications 1 à 5 dans des batteries lithium-ion.

**7.** Utilisation selon la revendication 6, dans laquelle, pendant la fabrication et/ou lors de l'utilisation de la cellule électrochimique en question, une différence de potentiel entre au moins une anode et au moins une cathode d'au moins 4,5 volt est atteinte au moins temporairement.

**8.** Utilisation de cellules électrochimiques selon l'une quelconque des revendications 1 à 5 pour l'exploitation de véhicules automobiles.

**9.** Utilisation de cellules électrochimiques selon l'une quelconque des revendications 1 à 5 pour le stockage d'énergie dans des appareils électriques de télécommunication.

**10.** Procédé de fabrication de cellules électrochimiques selon l'une quelconque des revendications 1 à 5, **caractérisé en ce qu'**une cathode (A) et une anode (B) sont combinées l'une avec l'autre dans un contenant et mélangées avec un électrolyte (C).

**11.** Procédé selon la revendication 10, **caractérisé en ce que** la pression intérieure de la cellule en question est réduite à une valeur inférieure à 25 000 Pa (Pascal) avant le mélange avec l'électrolyte.

Abbildung 1: schematischer Aufbau einer auseinandergenommenen elektrochemischen Zelle zum Testen von erfindungsgemäßen Mischungen

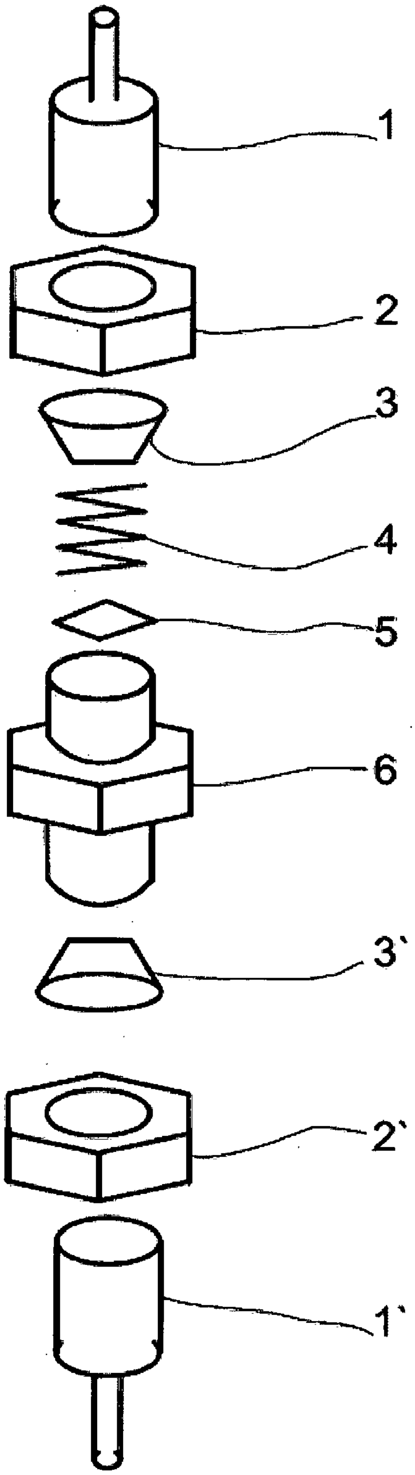

Abbildung 2: Kapazität vs. Zyklenzahl für EZ.1 (Kurve b) und V-EZ.2 (Kurve a)

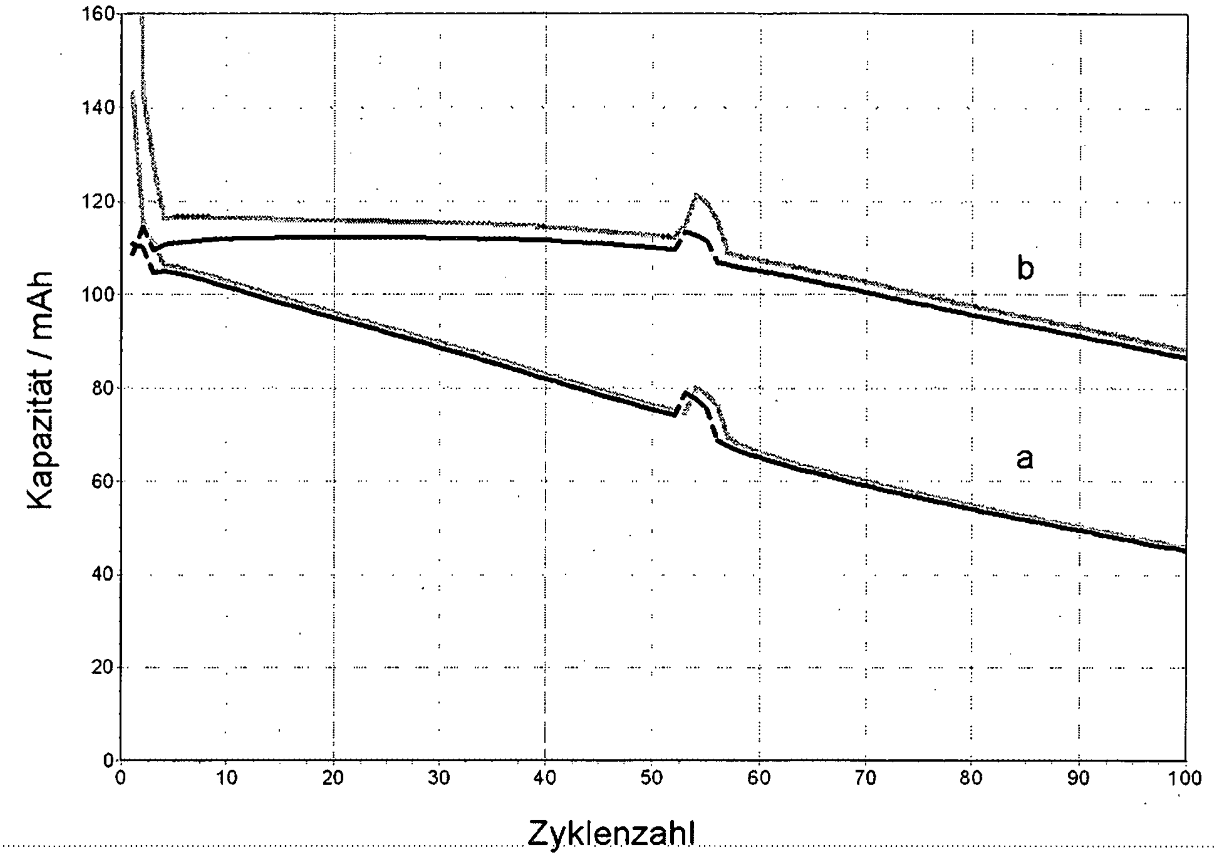

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2007049888 A
- US 6235431 B


### In der Beschreibung aufgeführte Nicht-Patentliteratur


- **D. AURBACH et al.** *J. Power Sci.,* 2006, vol. 162, 780